# EUROPEAN PATENT APPLICATION

(11) **EP 1 860 433 A1**
(43) Date of publication of application: **28.11.2007**
(21) Application number: 06010771.1
(22) Date of filing: 24.05.2006
(51) Int. Cl.: G01N 29/036, G01N 29/22

(54) **Ultrasonic resonator cell with uniform pressure on the ultrasonic transducers**

(71) Applicant: TF Instruments, Inc., Monmouth Junction NJ 08852 (US)
(72) Inventor: Funck, Theodor, 37077 Göttingen (DE); Gau, Daniel, 64404 Bickenbach (DE); Maier, Alexander, 74821 Mosbach (DE); Dickopf, Stefan, 69118 Heidelberg (DE)
(74) Representative: Hertz, Oliver

(57) **Abstract**

The invention relates to an ultrasonic resonator cell, comprising: a cell body having first and second opposite end faces forming at least one sample cavity extending between the end faces for receiving a sample to be investigated, a first electro-acoustical transducer wafer, a second electro-acoustical transducer wafer, a first end piece, a second end piece, and at least one fastener for applying axial pressure on the first and second end pieces for fastening the first and second electro-acoustical transducer wafers to the cell body on the respective end face of the cell body.

According to the invention the cell further comprises a first and a second tension plate each having a protrusion protruding in axial direction towards the first and second end pieces respectively, wherein the protrusions being adapted for conveying the axial pressure from the at least one fastener on the first and second end pieces such that the first and second end pieces exert a spatially uniform pressure on the respective electro-acoustical transducer wafer.

## Description

### FIELD OF THE INVENTION

The invention relates to ultrasonic resonator cells conforming to the preambles of the independent claims.

### BACKGROUND OF THE INVENTION

From EP 0 713 578 B1 a cell for measuring acoustical properties of fluid samples under high pressure conforming to the preambles of the independent claims is known. Similar cells are known from US 5 836 200. These conventional ultrasonic resonator cells may suffer from several disadvantages.

The conventional ultrasonic resonator cells have electro-acoustical transducer wafers each comprising a piezoelectric crystal disk. The transducer wafers each abut a cell body and are fixed to the cell body by end pieces and thus forming a stack. Screws exert axial pressure on the end pieces to hold the stack together. The axial pressure which may lead to an elastic deformation of the end pieces. This deformation yields an unevenly distributed stress within the transducer wafers that eventually may lead to crystal cracks.

To achieve a more homogenous contact pressure of the transducer wafers on the cell body, in EP 0 713 578 B1 holes through the piezoelectric crystal disk are provided for fixing the transducer wafer to the cell body. These holes in the crystal disk may be the origin of cracks and failure of the resonator cell as well.

Frequently, the conventional ultrasonic resonator cells are used within a thermostat, which completely surrounds the resonator cell in order to achieve a homogenous temperature over the complete resonator cell. With a cylindrically shaped ultrasonic resonator cell, as at is known from the state of the art, it may be difficult to obtain a sufficient thermal contact with the thermostat.

It is difficult to obtain a tight fit between the cylindrical resonator and a cylindrical or rectangular bore within the thermostat. If the diameter of the resonator is smaller than the bore in the thermostat only a line-shaped temperature contact between the ultrasonic resonator cell and the thermostat can be achieved. All the remaining regions of the ultrasonic resonator cell are heated by radiation and convection only. Direct contact, which yields a high heat flow, takes place in a very small area only. Thus, the maximum achievable heat flow from the thermostat to the cell is limited and unevenly distributed.

It is another problem with conventional ultrasonic resonator cells that it is difficult to fill the resonator if the cell is buried within a thermostat. For filling the resonator with a sample liquid to be investigated, the resonator must be contacted with a filling piece. This filling piece has to be connected with the resonator in a leak-proof way. To ensure a leak-proof connection a gasket inside the thermostat is required. Large temperature changes eventually lead to an unwanted leakage.

A further problem with conventional ultrasonic resonator cells relates to the shape of the sample cavity. Often, ultrasonic resonator cells need to be filled with a bag-like cuvette containing the sample to be investigated.

WO 2005/09594 A3 discloses such a cuvette for accommodating a sample for ultrasound measurements.

But these kinds of cuvettes may have a welding zone in which wall material of the cuvette is thickened. Therefore, insertion of the welding zone into the sample cavity may lead to measurement errors.

It is another disadvantage of conventional ultrasonic resonator cells that assembly is difficult and error-prone.

It is the technical problem of the present invention to alleviate disadvantages of state of the art ultrasonic resonator cells.

The invention solves this problem with ultrasonic resonator cells having the features of the independent claims. Preferred embodiments of the invention are described in the dependent claims.

According to a first aspect, the invention solves this problem with an ultrasonic resonator cell comprising: a cell body having first and second opposite end faces forming at least one sample cavity extending between the end faces for receiving a sample to be investigated, a first electro-acoustical transducer wafer, a second electro-acoustical transducer wafer, a first end piece, a second end piece, and at least one fastener for applying axial pressure on the first and second end pieces for fastening the first and second electro-acoustical transducer wafers to the cell body on the respective end face of the cell body, wherein the cell further comprises a first and a second tension plate each having a protrusion protruding in axial direction towards the first and second end pieces respectively, wherein the protrusions being adapted for conveying the axial pressure from the at least one fastener on the first and second end pieces such that the first and second end pieces preferably exert a spatially uniform pressure on the respective electro-acoustical transducer wafer.

It is an advantage of an ultrasonic resonator cell conforming to the present invention that cracks in the transducer wafer are much less likely to occur. Further, an ultrasonic resonator cell conforming to the invention is much easier and much cheaper to manufacture.

For the purpose of the present patent application "spatially uniform pressure" does not mean that the pressure has to be identical everywhere. It is sufficient that the axial pressure does not exhibit pressure peaks. In particular, a pressure peak occurs in an area in which the pressure is much higher than in the surrounding area. In particular, the pressure is regarded as being spatially uniform if the maximum pressure is less than two times the minimum pressure with regard to that area in which the first and second end pieces contact the first and second electro-acoustical transducer wafer, respectively.

Preferably, the protrusions are shaped for conveying axial pressure from the at least one fastener on the first and second end pieces respectively, such that the first and second and pieces exert a spatially uniform pressure on respective electro-acoustical transducer wafers.

Preferably, the tension plate has the same cross section as the cell body and preferably has 3, 4, 5, 6, 7, 8, or 9 holes for receiving fastening devices, such as screws. Preferably, the holes are evenly distributed over the tension plate. For example, the holes may be located at the corners of a equilateral polygon.

Preferably, the ultrasonic resonator cell is a sandwich type cell, i.e. the cell body, the transducer wafer and the first and second end piece means form a stack, the end pieces preferably being the axial terminal members of the stack.

In a preferred embodiment, the ultrasonic resonator cell has protrusions that are annular shaped. Annular shaped protrusions lead to a particularly highly spatially uniform pressure on the respective electro-acoustical transducer wafer.

Preferably, a centre of the annular shaped protrusions is located close to a centre of the first and second electro-acoustical transducer wafers.

In a preferred embodiment, the electro-acoustical transducer wafers contact the first and second end pieces in a radial transducer wafer contact interval and the protrusions contact the first and second end pieces in a radial protrusion contact interval, the radial protrusion contact interval being comprised in the radial transducer wafer contact interval.

Particularly, the radial transducer wafer contact interval is the perpendicular projection of the first electro-acoustical transducer wafer cross section on the surface of the first end piece which preferably equals the perpendicular projection of the second electro-acoustical transducer wafer cross section on the surface of the second end piece which preferably. Similarly, the radial protrusion contact interval is the perpendicular projection of the protrusion cross section on the first end piece surface which preferably equals the perpendicular projection of the protrusion cross section on the second end piece surface.

It will be noted that two intervals are regarded. Therefore, the above described geometric feature is independent of the axial gap between the contact zone of transducer wafer and end piece on the one hand and protrusion and protrusions and end piece on the other hand.

In a preferred embodiment, the radial protrusion contact interval is located substantially in the centre of the radial transducer wafer contact interval.

Preferably, a electro-acoustical transducer wafer is a circular disc or has a cross section that corresponds to a equilateral polygon. Alternatively, the transducer wafer is plate-shaped.

Conforming to a second aspect of the present invention, the problem is solved by an ultrasonic resonator cell, comprising: a cell body having first and second opposite end faces forming at least one sample cavity extending between the end faces for receiving a sample to be investigated, a first electro-acoustical transducer wafer, a second electro-acoustical transducer wafer, a first end piece, and a second end piece; the cell body, the electro-acoustical transducer wafers, the first end piece, and the second end piece forming a stack, whereby the stack has at least one plane side wall.

This ultrasonic resonator cell is able to provide improved thermal contact with an outer thermostat. The plane side wall provides the good thermal contact in particular to a rectangular hole in the thermostat. Pressing flat surfaces together results in better thermal contact than pressing curved surfaces together. Hence, the heat transfer from the thermostat to the ultrasonic resonator cell is improved.

In a preferred embodiment, the stack has a substantially rectangular cross section. In an alternative preferred embodiment, the stack has a substantially rhombic cross section. In a further alternative embodiment, the stack has a substantially polygonal cross section. In a preferred embodiment, the cross section is substantially quadratic.

In a preferred embodiment, the cavity is located in the centre of the stack. In a preferred embodiment, the cavity is located in an axial centre of the stack. Additionally or alternatively, the cavity is located in a radial centre of the stack.

Conforming to a third aspect, the present invention solves the problem with an ultrasonic resonator cell, comprising a cell body having first and second opposite end faces forming at least one sample cavity extending between the end faces for receiving a sample to be investigated, a first electro-acoustical transducer wafer, a second electro-acoustical transducer wafer, a first end piece, and a second end piece; the cell body having a body channel connecting the sample cavity to a surrounding of the cell, wherein the cell body comprises a stub connected with the body channel.

Preferably, the stub comprises a lateral aperture, the body channel connecting said lateral aperture and thereby providing a channel from the sample cavity to a surrounding of the ultrasonic resonator cell. Hence, the stub is arranged to provide an extension of the body channel.

By providing a stub connected with the body channel it is not necessary to use a filling piece to deliver the sample material to the sample cavity. Further, it is not necessary to use a gasket so that the risk of spilling the sample is significantly reduced.

In a preferred embodiment, the stub forms an integral part of the cell body. Preferably, the stub is made from the same material as the cell body. Preferably, the stub is manufactured from the same bulk block of raw material, e.g. by milling. In an alternative embodiment, the stub is welded or brazed to the cell body.

Conforming to a fourth aspect, the invention solves the problem with an ultrasonic resonator cell, comprising: a cell body having first and second opposite end faces forming at least one sample cavity extending along an axis between the first and second end faces for receiving a sample to be investigated, a first electro-acoustical transducer wafer, a second electro-acoustical transducer wafer, a first end piece, and a second end piece; the cell body having at least one lateral aperture and a body channel extending between the sample cavity and the lateral aperture, wherein the sample cavity comprises a measurement compartment extending along the axis and a side compartment in fluid communication with the measurement compartment, and the side compartment being provided on the opposite side of the body channel.

In particular, the measurement compartment is that part of the cavity which is subjected to standing ultrasonic acoustical waves during operation of the ultrasonic resonator cell. This acoustical waves field has a predetermined field intensity.

Preferably, in the side compartment there is no standing acoustical waves field, but only a stray field having a stray field intensity being at most a tenth part of the measurement field intensity. Preferably, the stray field intensity is at most a thousandth part of the measurement field intensity, preferably is at most 10⁻⁴ times as large as the measurement field intensity, preferably is at most 10⁻⁵ times as large as the measurement field intensity.

In a preferred embodiment, the ultrasonic resonator cell further comprises a cuvette with a deformable cuvette body. In use of the ultrasonic resonator cell the cuvette body extends into the side compartment.

It is an advantage of this embodiment that irregular folding of the bag shaped cuvette may be placed in the side compartment where no standing acoustical wave field is present. Therefore, the different material properties, e.g. in a welded zone of the cuvette, cause a negligible measurement error only.

Preferably, the cuvette body is made from elastic material. Preferably, a diameter D of the cuvette body is adjustable and has a length L being adapted to exceed the diameter of the measurement compartment.

In a preferred embodiment, the cuvette body comprises a welded zone. The length L of the cuvette body is chosen such that in use the welded zone extends into the side compartment.

Preferably, the diameter of the cuvette body is variable such that the diameter can be chosen smaller than a minimum diameter of the body channel and can be chosen larger than halve of the distance between the first and second electro-acoustical transducer wafers.

Conforming to a fifth aspect, the invention solves the problem with an ultrasonic resonator cell, comprising: a cell body having first and second opposite end faces forming at least one sample cavity extending between the end faces for receiving a sample to be investigated, a first electro-acoustical transducer wafer, a second electro-acoustical transducer wafer, a first end piece, and a second end piece, wherein the cell body comprises locating pins for adjusting the first and second electro-acoustical transducer wafers.

Advantageously, the locating pins assure that the cell body, the end piece bodies, and the transducer wafers are easily aligned correctly.

In a preferred embodiment, the first end piece and the second end piece comprise respective borings for receiving the location pins.

### BRIEF DESCRIPTION OF THE DRAWINGS

Further objects, advantages and features of the invention will become apparent from the following description of preferred embodiments in connection with the accompanying drawings, in which
- Figure 1: is an exploded view of an ultrasonic resonator cell adapted for implementing the invention,
- Figure 2: is a sectional elevational view of the ultrasonic resonator cell of Figure 1,
- Figure 3: is an exploded view of an ultrasonic resonator cell according to a first embodiment of the invention,
- Figure 4: is a sectional elevation view of the ultrasonic resonator cell of Figure 3,
- Figure 5: is a perspective view of an ultrasonic resonator cell illustrating features of a second and a third embodiment of the present invention,
- Figure 6: is a perspective sectional view of an ultrasonic resonator cell according to a fourth embodiment of the invention with a cell body and a cuvette,
- Figure 7: is the same view as in figure 6, but with the cuvette being placed in the sample cavity,
- Figure 8: is a perspective view of an ultrasonic resonator cell according to a fifth embodiment of the invention, and
- Figure 9: is a perspective view of a cell body according to a further embodiment of the present invention.

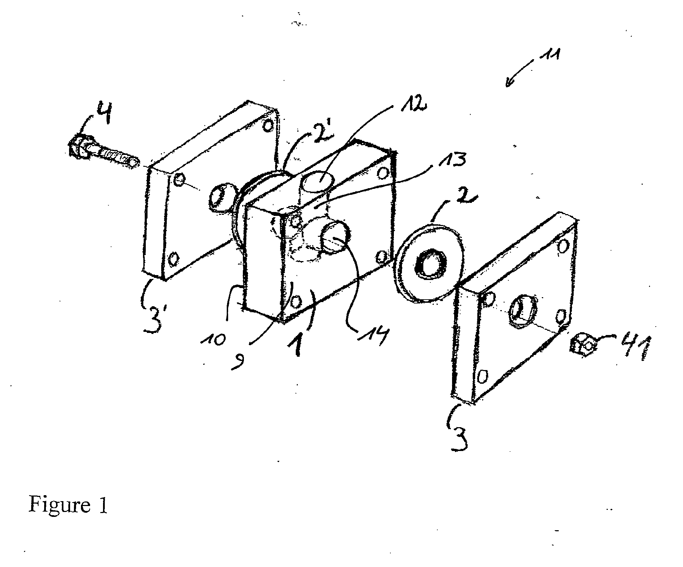

Figure 1 shows an ultrasonic resonator cell 11 comprising a cell body 1 having first and second opposite flat end faces 9, 10 forming a sample cavity 14 for receiving a sample to be investigated.

The cavity 14 extends along an axis A between the end faces 9, 10. The cell body 1 further has a lateral aperture 12 at a circumferential outer surface of the cell body 1 and a body channel 13 extending between the sample cavity 14 and the aperture 12.

The ultrasonic resonator cell 11 comprises electro-acoustical transducer wafers 2, 2' each having a first and a second main surface. The first main surface of the first electro-acoustical transducer wafer 2 contacts end face 9 of cell body 1. Respectively, the first main surface of the second electro-acoustical transducer wafer 2' contacts the end face 10 of cell body 1.

The first electro-acoustical transducer wafer 2 comprises a piezoelectric crystal plate and a first electrode and a second electrode (not shown) for contacting said piezoelectric crystal plate. Similarly, the second electro-acoustical transducer wafer 2' comprises a piezoelectric crystal plate and a first electrode and a second electrode (not shown).

The ultrasonic resonator cell 11 further comprises a first end piece 3 and a second end piece 3' for mounting the electro-acoustical transducer wafers 2, 2' to the cell body 1. The first and second end pieces 3, 3' comprise a central bore, the center of the bore being located on axis A. The first end piece and the second end piece 3, 3' each have a flat end face and an end wall opposite to said end face forming the sample cavity 14. The cell body 1, the electro-acoustical transducer wafers 2, 2', and the first and second end pieces 3, 3' form a stack 6 which is held together by four fasteners 4, only one of those four fasteners 4 being shown in figure 1.

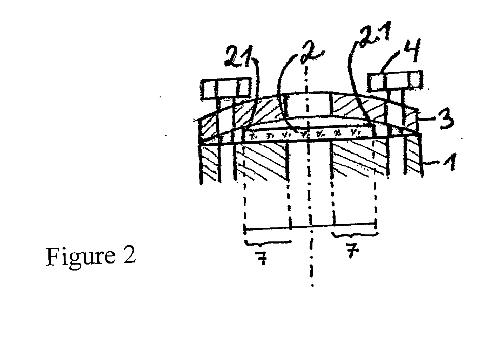

Referring now to figure 2, a terminal part of the stack 6 is shown with the fasteners 4 exerting axial pressure on the first end piece 3. Due to the axial pressure, the first end piece 3 deforms which leads to a highly non-uniform pressure on the electro-acoustical transducer wafer 2, as already described above.

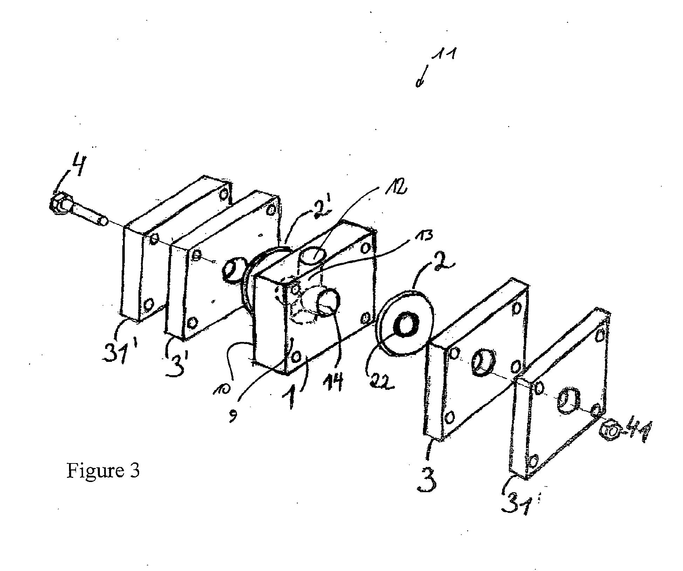

In figure 3, the same reference numerals are used for identical elements. In the ultrasonic measurement cell 11 of figure 3 the sample cavity 14 comprises a cylindrical axial measurement compartment 20 and a side compartment 16 extending perpendicular to the measurement compartment 20. The side compartment 16 extends on the opposite side of the body channel 13 and is in fluid communication with measurement compartment 20. The body channel 13 and the side compartment 16 each extend radially.

The end faces 9, 10 are as flat and smooth as possible, i.e. polished. The same applies to the end face of each end piece, which abuts the adjacent transducer wafers. Flatness and smoothness of the end faces of the cell body 1 and the end pieces 3, 3' which abut the equally flat main surface of the transducer wafers prevent penetration of fluid from the outside of the cell body into the resonator cavity 14.

To improve the sealing properties the transducer wafers 2, 2' comprise gaskets in form of o-ring seals 22, 22' (only o-ring 22 seal being shown in figure 3).

The transducer wafers 2, 2' bear an electrode (not shown) on each main surface. The electrode is formed by a thin layer of gold or any other suitable metal.

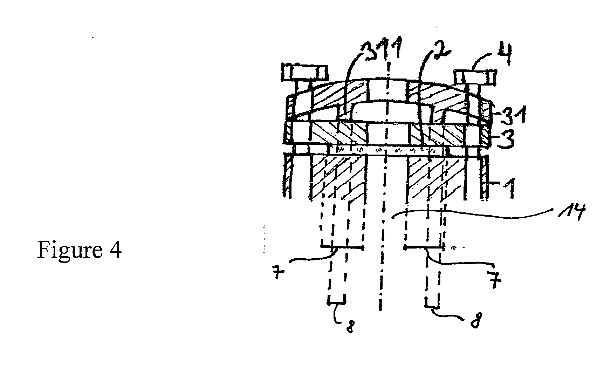

The ultrasonic resonator cell 11 shown in figure 3 comprises a first and a second tension plate 31, 31'. Figure 4 shows a sectional view of the stack 6 comprising the first tension plate 31 with fasteners 4 for exerting pressure on it.

The first tension plate 31 has a protrusion 311 protruding in an axial direction (i.e. in direction of axis A) towards the first end piece 3. The protrusions 311 convey axial pressure from the fasteners 4 on the first end piece 3 such that the first end piece 3 exerts a spatially uniform pressure on the first electro-acoustical transducer wafer 2. Similarly, protrusions 311' are provided on second tension plate 31' protruding in an axial direction (i.e. in direction of axis A) towards the second end piece 3'.

As can be seen from figure 4, the first electro-acoustical transducer wafer 2 contacts the first end piece 3 in a radial transducer wafer contact interval 7. The radial transducer wafer contact interval 7 is an interval of the radial coordinate r, if the cell body 1 has a cylindrical shape. If the cell body 1 has a different shape, the transducer wafer contact interval 7 is a two-dimensional area.

The protrusion 311 contacts the first end piece in a radial protrusion contact interval 8. The radial protrusion contact interval 8 is an interval of the radial coordinate r, too, if the cell body 1 has a cylindrical shape. If the cell body 1 has a different shape, the radial protrusion contact interval 8 is a two-dimensional area.

Similarly, the second electro-acoustical transducer wafer 2' contacts the second end piece 3' in the same radial transducer wafer contact interval 7 and the protrusion 311' contacts the second end piece 3' in the same radial protrusion contact interval 8.

As can be seen from figure 4, the radial protrusion contact interval 8 is comprised in the radial transducer wafer contact interval 7. As can be seen from figure 3, the stack 6 has four plane side walls 21a, 21b, 21c, 21d and its cross section is quadratic.

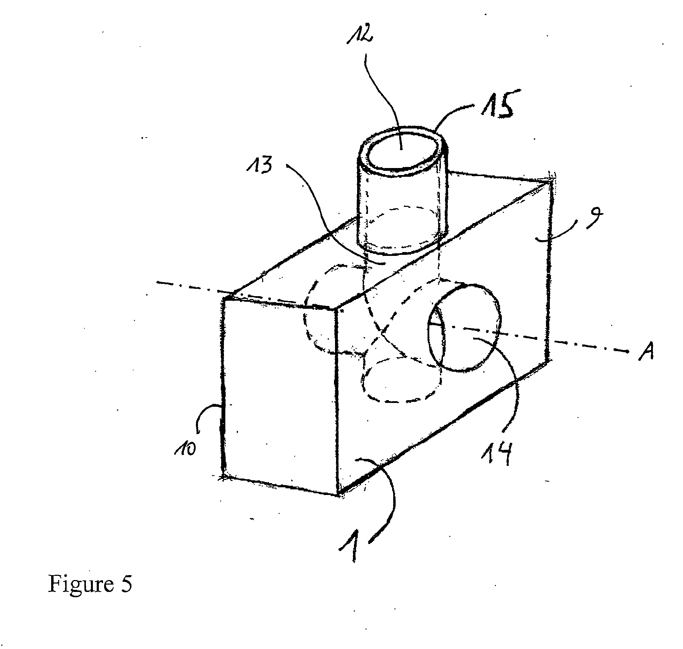

Referring now to figure 5, the cell body 1 comprises a stub 15, which forms an integral part of cell body 1. The stub 15 is an elongation of the body channel 13 and comprises the aperture 12.

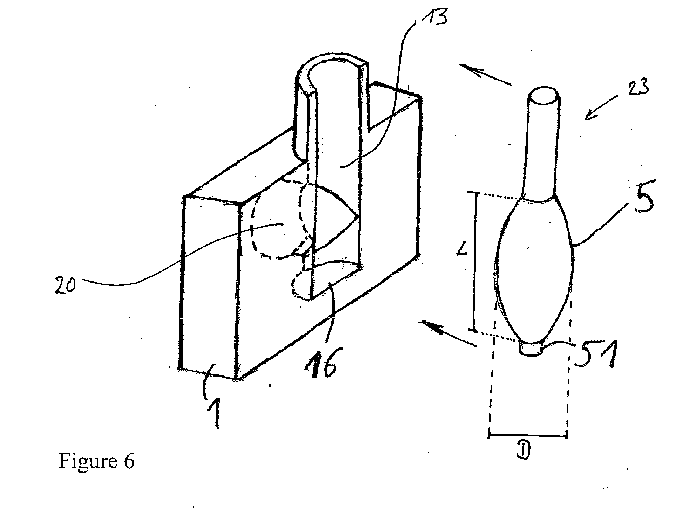

Figure 6 shows the cell body 1 comprising a stub 15 and a cuvette 23 having a cuvette body 5 and a welding zone 51 at one end of the cuvette body 5. The cuvette body 5 has a length L and a diameter D. As the cuvette body 5 is made from a deformable material, such as plastic or rubber, the diameter D may be much less than its maximum diameter.

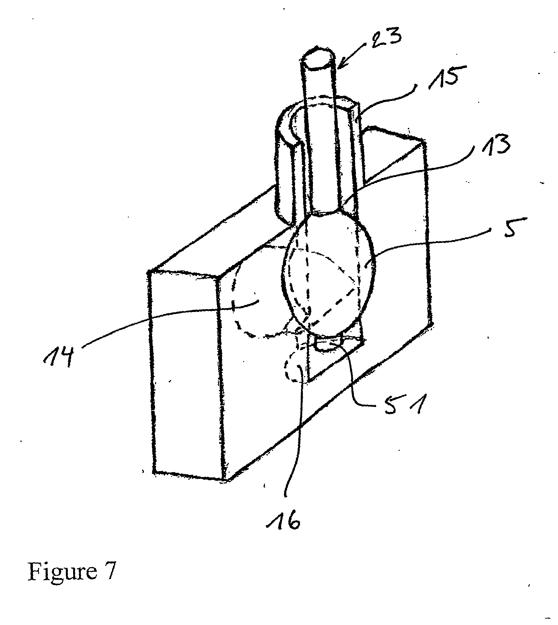

Figure 7 shows the cuvette 23 being introduced into the measurement compartment 20 and the welding zone 51 being located within the side compartment 16. During operation, a standing acoustical wave field is generated in the measurement compartment 20 so that the cuvette body 5 is subjected to this standing wave field having a specific field intensity. There is no standing acoustical wave field in the side compartment 16 and the resulting stray field intensity is much smaller than in the measurement compartment, e.g. 10⁻² to 10⁻³ times smaller. In an alternative embodiment the field intensity is 10⁻³ to 10⁻⁴ times smaller.

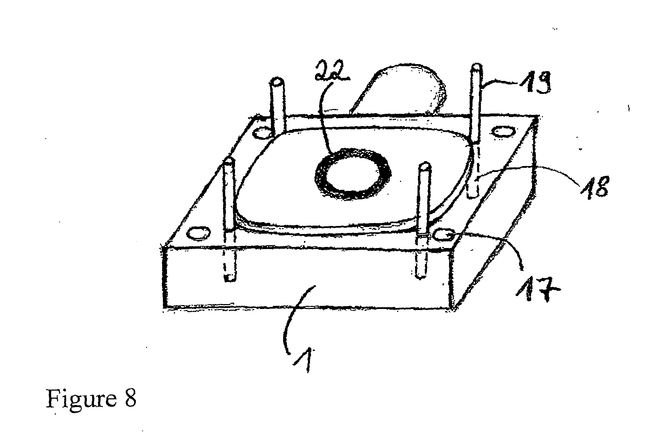

Figure 8 shows a cell body 1 comprising locating pins 19a, 19b, 19c, 19d being located in respective bores 18a, 18b, 18c, 18d. Respective bores (not shown) are provided in the cell body 1 for respective locating pins (not shown, either) in the second end piece 3'. Locating pins 19 are used to ensure proper aligning of the first and second end piece 3, 3', the cell body 1, the first and second electro-acoustical transducer wafer 2, 2', and annular gaskets 22, 22'.

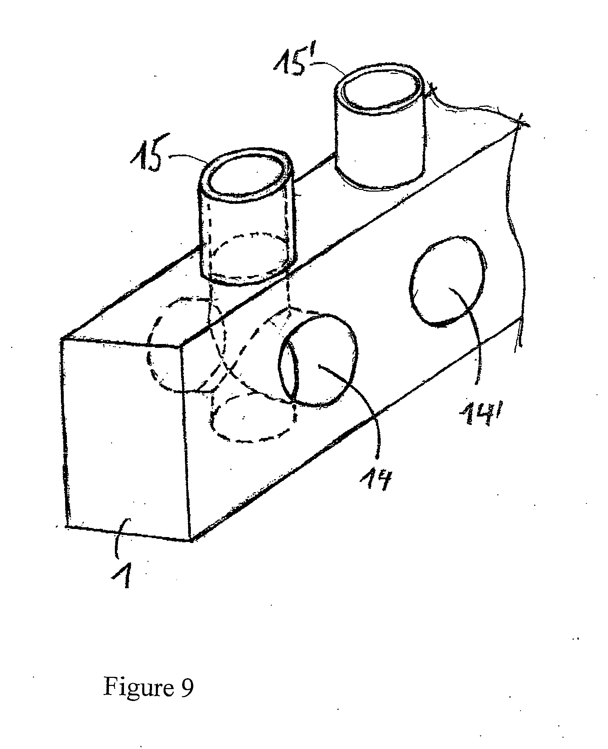

All embodiments shown in figures 1 to 8 can be provided with more than one sample cavity 14, as is shown in figure 9.

In the above description several aspects of the invention are described. Those aspects do not stand isolated so that every feature described in connection with a specific embodiment may be combined with any other embodiment.

The foregoing is provided to explain and disclose preferred embodiments of the present invention. It will be obvious to those skilled in the art that it is not so limited, but is susceptible of various other changes and modifications, without departing from the spirit thereof, and only such limitations shall be placed thereupon as are specifically set forth in this patent application.

## Claims

1. Ultrasonic resonator cell, comprising:
(a) a cell body (1) having first and second opposite end faces (9, 10) forming at least one sample cavity (14) extending between the end faces (9, 10) for receiving a sample to be investigated,
(b) a first electro-acoustical transducer wafer (2), a second electro-acoustical transducer wafer (2'),
(c) a first end piece (3), a second end piece (3'), and
(d) at least one fastener (4) for applying axial pressure on the first and second end pieces (3, 3') for fastening the first and second electro-acoustical transducer wafers (2, 2') to the cell body (1) on the respective end face (9, 10) of the cell body (1),
**characterized in that** the cell further comprises
a first and a second tension plate (31, 31') each having a protrusion (311, 311') protruding in axial direction towards the first and second end pieces (3, 3') respectively, wherein
the protrusions (311, 311') being adapted for conveying the axial pressure from the at least one fastener (4) on the first and second end pieces (3, 3') such that the first and second end pieces (3, 3') exert a spatially uniform pressure on the respective electro-acoustical transducer wafer (2, 2').

2. Ultrasonic resonator cell as claimed in claim 1, **characterized in that** the protrusions (311, 311') are annular shaped.

3. Ultrasonic resonator cell as claimed in any preceding claim, **characterized in that** the electro-acoustical transducer wafers (2, 2') contact the first and second end pieces (3, 3') in a radial transducer wafer contact interval (7) and
the protrusions (311, 311') contact the first and second end pieces (3, 3') in a radial protrusion contact interval (8), the radial protrusion contact interval (8) being comprised in the radial transducer wafer contact interval (7).

4. Ultrasonic resonator cell as claimed in claim 3, **characterized in that** the radial protrusion contact interval (8) is located substantially in the centre of the radial transducer wafer contact interval (7).

5. Ultrasonic resonator cell as claimed in any preceding claim, further comprising at least one of the following features:
(a) the cell body (1), the electro-acoustical transducer wafers (2, 2'), the first end piece (3), and the second end piece (3') forming a stack (6), which has at least one plane side wall (21, 21b, 21c, 21d); and/or
(b) the cell body (1) comprising a body channel (13) and a stub (15), the stub (15) being connected with the body channel (13); and/or
(c) the cell body (1) comprising a body channel (13), the sample cavity (14) extending along an axis (A), the sample cavity (14) comprising a measurement compartment (20) extending along the axis (A) and a side compartment (16) in fluid communication with the measurement compartment (20), wherein the side compartment (16) is provided on the opposite side of the body channel (13); and/or
(d) the cell body (1) comprising locating pins (19) for adjusting the first and second electro-acoustical transducer wafers (2, 2').

6. Ultrasonic resonator cell, comprising:
(a) a cell body (1) having first and second opposite end faces (9, 10) forming at least one sample cavity (14) extending between the end faces (9, 10) for receiving a sample to be investigated,
(b) a first electro-acoustical transducer wafer (2), a second electro-acoustical transducer wafer (2'),
(c) a first end piece (3), and a second end piece (3');
(d) the cell body (1), the electro-acoustical transducer wafers (2, 2'), the first end piece (3), and the second end piece (3') forming a stack (6),
**characterized in that** the stack (6) has at least one plane side wall (21, 21b, 21c, 21d).

7. Ultrasonic resonator cell as claimed in claim 6, **characterized in that** the cross section is substantially quadratic.

8. Ultrasonic resonator cell as claimed in claim 6 or claim 7, **characterized in that** the cavity (14) is located in the centre of the stack (6).

9. Ultrasonic resonator cell, comprising:
(a) a cell body (1) having first and second opposite end faces (9, 10) forming at least one sample cavity (14) extending between the end faces (9, 10) for receiving a sample to be investigated,
(b) a first electro-acoustical transducer wafer (2), a second electro-acoustical transducer wafer (2'),
(c) a first end piece (3), and a second end piece (3');
(d) the cell body (1) having a body channel (13) connecting the sample cavity (14) to a surrounding of the cell,
**characterized in that** the cell body (1) comprises a stub (15) connected with the body channel (13).

10. Ultrasonic resonator cell as claimed in claim 9, **characterized in that** the stub (15) forms an integral part of the cell body (1).

11. Ultrasonic resonator cell, comprising:
(a) a cell body (1) having first and second opposite end faces (9, 10) forming at least one sample cavity (14) extending along an axis (A) between the first and second end faces (9, 10) for receiving a sample to be investigated,
(b) a first electro-acoustical transducer wafer (2), a second electro-acoustical transducer wafer (2'),
(c) a first end piece (3), and a second end piece (3');
(d) the cell body (1) having at least one lateral aperture (12) and a body channel (13) extending between the sample cavity (14) and the lateral aperture (12),
**characterized in that**
(e) the sample cavity (14) comprises a measurement compartment (20) extending along the axis (A) and a side compartment (16) in fluid communication with the measurement compartment (20), and
(f) the side compartment (16) being provided on the opposite side of the body channel (13).

12. Ultrasonic resonator cell as claimed in claim 11, further comprising a cuvette (23) with a deformable cuvette body (5), wherein in use the cuvette body (5) extends into the side compartment (16).

13. Ultrasonic resonator cell as claimed in claim 12, wherein the cuvette body (5) comprises a welded zone (51), a length (L) of the cuvette body (5) being chosen such that in use the welded zone (51) extends into the side compartment (16).

14. Ultrasonic resonator cell, comprising:
(a) a cell body (1) having first and second opposite end faces (9, 10) forming at least one sample cavity (14) extending between the end faces (9, 10) for receiving a sample to be investigated,
(b) a first electro-acoustical transducer wafer (2), a second electro-acoustical transducer wafer (2'),
(c) a first end piece (3), and a second end piece (3'),
**characterized in that** the cell body (1) comprises locating pins (19) for adjusting the first and second electro-acoustical transducer wafers (2, 2').

15. Ultrasonic resonator cell as claimed in claim 14, wherein the first end piece (3) and the second end piece (3') comprise respective borings for receiving the locating pins (19).
